# FASCICULE DE BREVET EUROPEEN

(11) **EP 2 118 196 B1**
(45) Date de publication et mention de la délivrance du brevet: **14.08.2013**
(21) Numéro de dépôt: 08762071.2
(22) Date de dépôt: 12.02.2008
(51) Int. Cl.: C08L 27/06, C08L 55/02, C08L 69/00

(54) **COMPOSITION THERMOPLASTIQUE COMPRENANT UNE MATRICE THERMOPLASTIQUE ET UN TERPOLYMERE METHACRYLATE D'ALKYLE - ACRYLATE D'ALKYLE - MONOMERE STYRENIQUE**
THERMOPLASTISCHE ZUSAMMENSETZUNG MIT EINER THERMOPLASTISCHEN MATRIX UND EINEM TERPOLYMER AUS ALKYLMETHACRYLAT, ALKYACRYLAT UND EINEM STYRENMONOMER
THERMOPLASTIC COMPOSITION COMPRISING A THERMOPLASTIC MATRIX AND A TERPOLYMER OF ALKYL METHACRYLATE, ALKYL ACRYLATE, AND A STYRENE MONOMER

(30) Priorité: 12.02.2007 FR 0753187
(43) Date de publication de la demande: 18.11.2009
(73) Titulaire: ARKEMA FRANCE, 92700 Colombes (FR)
(72) Inventeur: DISSON, Jean-Pierre, F-69390 Vernaison (FR); PIRRI, Rosangela, F-64121 Montardon (FR)
(86) Numéro de dépôt international: PCT/FR2008/050219
(87) Numéro de publication internationale: WO 2008/104701

(56) Documents cités:
- EP-A1- 1 422 264
- EP-A2- 0 058 229
- FR-A1- 2 518 104
- US-A- 5 821 274
- DATABASE WPI Section Ch, Week 200280 Thomson Scientific, London, GB; Class A32, AN 2002-735862 [80] XP002488169 & JP 2002 167457 A (SOUTH-ASIA PLASTIC CO LTD) 11 juin 2002 (2002-06-11)
- JEAN-PIERRE DISSON ET AL: 'Acrylic Process Aids for PVC: From Theoretical Concepts to Practical use' JOURNAL OF VINYL AND ADDITIVE TECHNOLOGY, [en ligne] vol. 9, no. 4, 01 Décembre 2003, pages 177 - 187, XP055036710 Extrait de l'Internet: <URL:http://onlinelibrary.wiley.com/store/1 0.1002/vnl.10081/asset/10081_ftp.pdf?v=1&t= h6ge5ekl&s=68da8edd1297a5cdf1ee99d616243e13 a1707037> [extrait le 2012-08-29]

## Description

L'invention a trait à une composition thermoplastique expansée comprenant une matrice thermoplastique et un agent de mise en oeuvre spécifique présentant notamment d'excellentes propriétés mécaniques, en particulier une isotropie de ses propriétés.

L'invention a trait également à un procédé de préparation d'un article à partir de ladite composition et à un article expansé obtenu à partir de cette compositions.

Les agents de mise en oeuvre (désignés également par la terminologie anglaise « processing aids ») sont des agents destinés à conférer à une matrice thermoplastique dans laquelle ils sont incorporés, des propriétés améliorées de tenue mécanique de la composition à l'état fondu (notamment en terme d'allongement à la rupture, d'élasticité, de résistance à la rupture).

Généralement, les agents de mise en oeuvre sont des copolymères obtenus par copolymérisation de méthacrylate de méthyle avec un ou plusieurs monomères acrylates et/ou méthacrylates, lesdits copolymères présentant un poids moléculaire pouvant être égal à plusieurs millions. Les monomères acrylates sont généralement des monomères acrylates d'alkyle en C₁-C₈, tandis que les monomères méthacrylates sont généralement des méthacrylates d'alkyle en C₁-C₈. Ces copolymères sont décrits par exemple dans J.-P. Disson and S. Gisis "Acrylic Process Aids for PVC: From Theoretical Concepts to Practical Use", Journal of Vinyl and Additive Technology, 2003, 9, No. 4, pp. 177 - 187.

Toutefois, ces agents de mise en oeuvre se composent de chaînes de copolymère présentant une composition inhomogène. En particulier, pour les agents de mise en oeuvre obtenus par copolymérisation en discontinu (ou batch) de méthacrylate de méthyle et d'acrylate de n-butyle, le méthacrylate de méthyle et l'acrylate de n-butyle ont des rapports de réactivité très différents, ce qui a pour effet une incorporation plus rapide du méthacrylate de méthyle par rapport à l'acrylate de n-butyle.

Ceci se concrétise par des chaînes de copolymères peu riches en acrylate de n-butyle en début de copolymérisation et plus riches en acrylate de n-butyle en fin de copolymérisation. Le mélange de chaînes de copolymères obtenu en fin de copolymérisation présente ainsi une grande inhomogénéité.

Une fois incorporés dans une matrice thermoplastique, ces copolymères confèrent à la composition résultante un caractère hétérogène et induit une anisotropie dans les propriétés de cette composition. Ce caractère hétérogène se manifeste notamment par un aspect irrégulier en surface, par exemple, après extrusion.

En outre, les mousses de PVC, et en particulier les mousses dites rigides telles que les mousses décrites dans US 5821274, sont aujourd'hui souvent non satisfaisantes en termes d'aspect de surface, de densité, et de propriétés mécaniques.

Les Inventeurs se sont fixé comme objectif de proposer une composition thermoplastique comprenant une matrice thermoplastique et un copolymère ayant une fonction d'agent de mise en oeuvre, laquelle composition présente un aspect homogène, même lorsque la polymérisation est mise en oeuvre en mode discontinu, et par voie de conséquence des propriétés mécaniques uniformes.

Les inventeurs ont ainsi découvert de façon surprenante qu'en incorporant un monomère particulier dans une gamme spécifique dans le copolymère jouant un rôle d'agent de mise en oeuvre, il était possible de surmonter les inconvénients de l'art antérieur.

Ainsi l'invention a trait, selon un premier objet, à une composition thermoplastique comprenant :
* au moins une matrice thermoplastique, et
* au moins un copolymère obtenu par copolymérisation de méthacrylate d'alkyle en C₁-C₄, d'un comonomère acrylate d'alkyle en C₁-C₈ et d'un monomère styrénique,
le méthacrylate d'alkyle en C₁-C₄ étant présent en une teneur allant de 75% à 92% en masse par rapport à la masse totale des monomères, le comonomère acrylate d'alkyle en C₁-C₈ étant présent en une teneur allant de 5 à 20% en masse par rapport à la masse totale des monomères et le monomère styrénique étant présent en une teneur allant de 3 à 20% en
masse par rapport à la masse totale des monomères, qui est sous forme expansée. Les compositions de PVC et des terpolymères méthacrylate d'alkyle - acrylate d'alkyle - monomère styrénique sont connues par exemple de EP0058229 et EP1422264, mais l'art antérieur ne divulgue pas de mousses préparées à partir de ces compositions.

Avantageusement, le copolymère est obtenu par copolymérisation en discontinu (en « batch ») d'un méthacrylate d'alkyle C₁-C₄, de préférence de méthacrylate de méthyle, d'un comonomère acrylate en C₁-C₈ et d'un monomère styrénique.

Par masse totale des monomères, on entend la somme des masses introduites de méthacrylate d'alkyle en C₁-C₄, de comonomère acrylate d'alkyle en C₁-C₈ et de monomère styrénique.

L'introduction du monomère styrénique dans la gamme précitée, générant ainsi un changement de rapport de réactivité des trois monomères, contribue à faciliter l'introduction dans les chaînes du copolymère du monomère acrylate.

Ainsi, l'introduction d'un monomère styrénique dans la gamme spécifiée ci-dessus confère au copolymère résultant une homogénéité de composition des chaînes, qui n'existait pas pour des copolymères ne présentant pas de monomère styrénique.

Par homogénéité de composition des chaînes, on entend des chaînes comportant toutes sensiblement les mêmes ratios de comonomères acrylate/méthacrylate/styrénique. Cette homogénéité de composition des chaînes peut être déterminée par toute méthode connue en soi, et par exemple par « Liquid Adsorption Chromatography » (LAC).

L'homogénéité des chaînes permet, après incorporation dans la résine thermoplastique, l'obtention d'une composition thermoplastique à propriétés rhéologiques améliorées, et ainsi des propriétés mécaniques améliorées, que ce soit en termes d'allongement à la rupture, d'élasticité, de résistance à la rupture.

Qui plus est, l'introduction du monomère styrénique ne dégrade pas les propriétés mécaniques de la composition ainsi que la compatibilité du copolymère avec la matrice thermoplastique. Il importe que le monomère styrénique ne soit pas présent à plus de 20%, afin d'éviter la perte de compatibilité avec la matrice.

Selon la présente invention, le copolymère résulte de la copolymérisation d'un méthacrylate d'alkyle en C₁-C₄, d'un comonomère acrylate d'alkyle en C₁-C₈ et d'un monomère styrénique, ledit méthacrylate d'alkyle en C₁-C₄ et ledit monomère styrénique étant présents en des teneurs spécifiques.

Le méthacrylate d'alkyle en C₁-C₄ est présent en une teneur allant de 75 à 92% en masse par rapport à la masse totale de monomères, et préférentiellement de 80 à 87%. De préférence, le méthacrylate d'alkyle en C₁-C₄ est le méthacrylate de méthyle.

Le comonomère acrylate d'alkyle en C₁-C₈ peut être choisi parmi l'acrylate d'éthyle, l'acrylate de n-butyle, l'acrylate de 2-éthylhexyle, et préférentiellement l'acrylate de n-butyle.

Le comonomère acrylate d'alkyle en C₁-C₈ est présent en une teneur allant de 5% à 20% en masse par rapport à la masse totale des monomères, et préférentiellement de 10% à 20% en masse.

Selon l'invention, le monomère styrénique peut être choisi parmi le styrène, l'éthylstyrène, l'α-méthylstyrène.

Le monomère styrénique est généralement présent en une teneur allant de 3 à 20% en masse par rapport à la masse totale des monomères, avantageusement de 4 à 12%.

Un copolymère particulier pouvant entrer avantageusement dans les compositions de l'invention est un copolymère obtenu par polymérisation de méthacrylate de méthyle, d'acrylate de n-butyle et de styrène.

Selon un mode de réalisation tout particulièrement préféré, le copolymère défini ci-dessus possède un ratio méthacrylate de méthyle/acrylate de n-butyle/styrène compris entre 80-90/7-10/3-10.

Les copolymères présentent avantageusement, selon l'invention, une masse moléculaire moyenne en masse M_{w} allant de 2 millions à 10 millions, de préférence de 4 à 8 millions.

Selon l'invention, le copolymère représente avantageusement de 0,3% à 20% en masse par rapport à la masse totale de la composition, de préférence, de 4 à 15%, et plus préférentiellement de 5 à 12%.

Les copolymères introduits dans les compositions de l'invention peuvent être préparés par polymérisation en émulsion du méthacrylate d'alkyle en C₁-C₄, du comonomère acrylate d'alkyle en C₁-C₈ et du monomère styrénique, en présence d'un amorceur de polymérisation, d'un émulsifiant et éventuellement d'un agent de transfert de chaîne.

Le milieu de polymérisation employé est généralement de l'eau.

Comme émulsifiants, on peut citer les tensioactifs anioniques tels qu'un sel d'acide gras, un sel alkylsulfate, un sel alkylbenzènesulfate, un sel alkylphosphate ou un sel sulfosuccinate diester ou des tensioactifs non-ioniques, tels qu'un polyoxyéthylène alkyl éther ou un ester d'acide gras polyoxyéthylène.

Comme amorceurs de polymérisation, on peut citer un/des sel(s) persulfate(s) tels que le persulfate de sodium, le persulfate de potassium, le persulfate d'ammonium, un peroxyde organique tel que l'hydroperoxyde de *tert*-butyle, l'hydroperoxyde de cumène, le peroxyde de benzoyle, le peroxyde de lauroyle ou un composé azo.

Comme agents de transfert de chaîne, on peut citer le *tert*-dodécylmercaptan, le *tert*-décylmercaptan, le n-dodécylmercaptan, le n-décylmercaptan, le n-octylmercaptan.

Selon l'invention, la matrice thermoplastique peut être une matrice à base de polychlorure de vinyle, ABS (correspondant à un copolymère acrylonitrile-butadiène-styrène), ASA (correspondant à un comonomère acrylate-styrène-acrylonitrile), polycarbonate-polyester, polycarbonate-ABS, polycarbonate-ASA, ou mélange de deux ou plusieurs de ces polymères. De préférence, la matrice est à base de polychlorure de vinyle.

Notamment, lorsque la matrice est à base de polychlorure de vinyle, la composition peut comprendre également des stabilisants thermiques tels que des composés organo-étains, des sels de plomb, des sels de métaux mixtes à base de calcium et de zinc, des lubrifiants, des charges minérales telles que le carbonate de calcium, des pigments, des retardateurs de flamme, des agents d'expansion, et autres additifs couramment utilisés et connus dans le domaine.

L'invention a trait également selon un second objet à un procédé de fabrication d'un article expansé comprenant :
- une étape de formation d'un mélange de la composition thermoplastique telle que définie ci-dessus, et
- une étape de formation dudit article à partir de ladite composition.

L'étape de formation peut être mise en oeuvre par tout procédé connu de l'homme du métier, par exemple procédé de moulage, tel que le moulage par injection, ou par extrusion.

Selon un mode de réalisation tout particulièrement avantageux, l'article expansé comprend une matrice en polychlorure de vinyle.

Pour la réalisation d'articles expansés, il faudra prévoir l'ajout d'au moins un agent d'expansion, tel que l'azodicarbonamide, le bicarbonate de sodium, et autres agents d'expansion connus de l'homme du métier.

Enfin, l'invention a trait, selon un troisième objet, à un article expansé formé à partir de ladite composition thermoplastique telle que définie ci-dessus. Par exemple, cet article peut revêtir la forme d'un profilé expansé, d'une plaque expansée, d'un tube expansé. Lesdits articles sont de préférence en polychlorure de vinyle.

Grâce à la composition thermoplastique de l'invention, lesdits articles présentent des surfaces régulières, notamment exemptes d'ondulations, et possèdent des structures cellulaires fermées et de taille régulière.

L'invention va maintenant être décrite par rapport aux exemples suivants donnés à titre illustratif et non limitatif.

Dans ces exemples, l'homogénéité de composition entre les chaînes de copolymères est déterminée par la largeur du pic à mi-hauteur obtenu par chromatographie à adsorption en phase liquide (correspondant à la terminologie anglaise « Liquid Adsorption Chromatography » (LAC)), cette méthode consistant à classer suivant le volume d'élution les copolymères en fonction de leur polarité et non de leur masse moléculaire.

Plus précisément, la méthode consiste à dissoudre le copolymère à analyser dans un solvant (par exemple le tétrahydrofurane ou THF), à injecter la solution résultante en début de colonne, puis à faire éluer les chaînes de copolymère avec un gradient de mélange de solvants.

Ce mélange sera de l'hexane pur au début (l'hexane étant un non-solvant du copolymère) puis s'enrichira en THF jusqu'à devenir du THF pur. Cette technique est décrite notamment dans Macromolecules, 34(8), (2001), pages 2667-2672.

### EXEMPLE 1

On charge dans un réacteur sous agitation 8500 g d'eau, 5,23 g de Na₂CO₃ et 78,20 g de laurylsulfate de sodium. On agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 3959 g de méthacrylate de méthyle, 625 g de styrène et 625 g d'acrylate de n-butyle.

Ensuite, on introduit le mélange rapidement dans le réacteur à l'aide d'une pompe. Quand la température du milieu réactionnel atteint 55°C, on introduit 7,8 g de persulfate de potassium dissous dans 148 g d'eau. On rince la ligne avec 50 g d'eau.

On attend la montée en température du milieu réactionnel pour atteindre le pic de l'exotherme. On laisse encore finir la polymérisation pendant 60 minutes après le pic de l'exotherme. On refroidit le réacteur jusqu'à 30°C. Le polymère est ensuite récupéré en séchant le latex par atomisation.

### EXEMPLE COMPARATIF 1

On charge dans un réacteur sous agitation 8600 g d'eau, 5,23 g de Na₂CO₃ et 78,20 g de laurylsulfate de sodium et on agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 4167 g de méthacrylate de méthyle et 1042 g d'acrylate de n-butyle.

Ensuite, on introduit le mélange rapidement dans le réacteur à l'aide d'une pompe. Quand la température du milieu réactionnel atteint 55°C, on introduit 7,81 g de persulfate de potassium dissous dans 98,08 g d'eau. On rince la ligne avec 50 g d'eau.

On attend la montée en température du milieu réactionnel pour atteindre le pic de l'exotherme. On laisse encore finir la polymérisation pendant 60 minutes après le pic de l'exotherme.

On refroidit le réacteur jusqu'à 30°C et on soutire le latex.

### EXEMPLE 2

On charge dans un réacteur sous agitation 8500 g d'eau, 5,23 g de Na₂CO₃ et 78,20 g de laurylsulfate de sodium et on agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 4206 g de méthacrylate de méthyle, 260,4 g de styrène et 742 g d'acrylate de n-butyle.

Ensuite, on introduit le mélange rapidement dans le réacteur à l'aide d'une pompe. Quand la température du milieu réactionnel atteint 55°C, on introduit 7,81 g de persulfate de potassium dissous dans 148,39 g d'eau. On rince la ligne avec 50 g d'eau.

On attend la montée en température du milieu réactionnel pour atteindre le pic de l'exotherme. On laisse encore finir la polymérisation pendant 60 minutes. On refroidit le réacteur jusqu'à 30°C et on soutire le latex.

### EXEMPLE COMPARATIF 2

On charge dans un réacteur sous agitation 8600 g d'eau, 5,23 g de Na₂CO₃ et 78,20 g de laurylsulfate de sodium et on agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 4427 g de méthacrylate de méthyle et 781 g d'acrylate de n-butyle.

Ensuite, on introduit le mélange rapidement dans le réacteur à l'aide d'une pompe. Quand la température du milieu réactionnel atteint 55°C, on introduit 7,81 g de persulfate de potassium dissous dans 98,08 g d'eau. On rince la ligne avec 50 g d'eau.

On attend la montée en température du milieu réactionnel pour atteindre le pic de l'exotherme. On laisse encore finir la polymérisation pendant 60 minutes après le pic de l'exotherme. On refroidit le réacteur jusqu'à 30°C et on soutire le latex.

### EXEMPLE 3

On charge dans un réacteur sous agitation 8500 g d'eau, 5,23 g de Na₂CO₃ et 78,20 g de laurylsulfate de sodium et on agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 4427,9 g de méthacrylate de méthyle, 260,5 g de styrène, 520,9 g d'acrylate de n-butyle et 0,18 g de n-octylmercaptan.

Ensuite, on introduit le mélange rapidement dans le réacteur à l'aide d'une pompe. Quand la température du milieu réactionnel atteint 55°C, on introduit 7,81 g de persulfate de potassium dissous dans 148,39 g d'eau. On rince la ligne avec 50 g d'eau.

On attend la montée en température du milieu réactionnel pour atteindre le pic de l'exotherme. On laisse encore finir la polymérisation pendant 60 minutes après le pic de l'exotherme. On refroidit le réacteur jusqu'à 30°C et on soutire le latex.

### EXEMPLE COMPARATIF 3

On charge dans un réacteur sous agitation 8600 g d'eau, 5,23 g de Na₂CO₃ et 78,20 g de laurylsulfate de sodium et on agite l'ensemble jusqu'à complète dissolution.

On effectue successivement trois purges vide-azote et on laisse le réacteur sous un léger vide. Puis on met en chauffe le réacteur.

Parallèlement, on dégaze à l'azote pendant 30 minutes un mélange comprenant 4688 g de méthacrylate de méthyle et 521 g d'acrylate de n-butyle et 0,18 g de n-octylmercaptan.

Ensuite, on introduit le mélange rapidement dans le réacteur à l'aide d'une pompe. Quand la température du milieu réactionnel atteint 55°C, on introduit 7,81 g de persulfate de potassium dissous dans 98,08 g d'eau. On rince la ligne avec 50 g d'eau.

On attend la montée en température du milieu réactionnel pour atteindre le pic de l'exotherme. On laisse encore finir la polymérisation pendant 60 minutes après le pic de l'exotherme. On refroidit le réacteur jusqu'à 30°C et on soutire le latex.

Le tableau 1 ci-dessous illustre les compositions et caractéristiques des exemples 1 à 3 et des exemples comparatifs 1 à 3 décrits ci-dessus.

**-- Tableau 1 --**

| ***Exemples*** | ***MMA⁽¹⁾ (en g)*** | ***Styrène (en g)*** | ***BA⁽²⁾ (en g)*** | ***Largeur à mi-hauteur du pic (LAC)*** |
|---|---|---|---|---|
| 1 | 3959 | 625 | 625 | 0,9 |
| Comparatif 1 | 4167 | 0 | 1042 | 5,13 |
| 2 | 4206 | 260,4 | 742 | 1,1 |
| Comparatif 2 | 4427 | 0 | 781 | 4,4 |
| 3 | 4427,9 | 260,5 | 520,9 | 1,1 |
| Comparatif 3 | 4688 | 0 | 521 | 2,2 |

| | | | | |
|---|---|---|---|---|
| ⁽¹⁾ MMA=méthacrylate de méthyle ⁽²⁾ BA= acrylate de n-butyle | | | | |

La diminution de la largeur à mi-hauteur du pic des copolymères des exemples 1, 2 et 3 par rapport à ceux des exemples comparatifs indique donc une amélioration de l'homogénéité des compositions des chaînes de copolymères.

### EXEMPLE 4

Cet exemple illustre la mise en oeuvre des copolymères préparés à l'exemple 3 et à l'exemple comparatif 3, dans un résine polychlorure de vinyle (PVC).
Les copolymères sont introduits dans une formulation comprenant une résine PVC de Kwert 57, environ 5 pcr d'un « one pack » de type Naftosafe^{®} 30175 (contenant des stabilisants thermiques à base de sels de calcium et zinc costabilisés et des lubrifiants, et disponible auprès de la Société Chemson), environ 5 pcr de carbonate de calcium (1 pcr correspondant à 1 part d'additif pour 100 parts de résine PVC), environ 2 pcr de l'oxyde de titane, et environ 0,5 pcr d'un agent gonflant, tel que l'azodicarbonamide.

Les copolymères sont introduits à raison de 10 pcr.

Le mélange est homogénéisé dans un mélangeur rapide de type Papenmeyer.

Le mélange sec (correspondant à la terminologie anglaise « dry blend ») est extrudé avec une extrudeuse Haake-Polylab de laboratoire équipée d'une mono+vis et d'une filière jonc de diamètre 4 mm.

La rotation de la vis est de 32 tours/min. Les températures de consigne sont de 140°C, 170°C et 185°C en allant de l'arrière du fourreau d'extrudeuse vers la filière. La température de consigne de la filière est de 160°C.

Les deux formulations ont un débit équivalent de l'ordre de 2,1 kg/h. Dans ces conditions, l'échantillon selon l'exemple 3 conduit à un extrudat expansé de surface régulière et de densité 0,52. Ceci témoigne de l'homogénéité des chaînes de copolymère, et ce, grâce à l'adjonction de styrène dans une gamme spécifique.

L'échantillon selon l'exemple comparatif 3 conduit à un jonc expansé très irrégulier, formant de nombreuses vagues en surface et de densité 0,56, ce qui atteste de l'inhomogénéité des chaînes de copolymères.

### EXEMPLE 5

Cet exemple illustre la mise en oeuvre des copolymères préparés à l'exemple 2 et à l'exemple comparatif 2, dans un résine polychlorure de vinyle (PVC).

Les copolymères sont introduits dans une formulation comprenant une résine PVC de Kwert 57, environ 5 pcr d'un « one pack » de type Naftosafe^{®} 30175 (contenant des stabilisants thermiques à base de sels de calcium et zinc costabilisés et des lubrifiants, et disponible auprès de la Société Chemson), environ 5 pcr de carbonate de calcium (1 pcr correspondant à 1 part d'additif pour 100 parts de résine PVC), environ 2 pcr de l'oxyde de titane, et environ 0,5 pcr d'un agent gonflant, tel que l'azodicarbonamide.

Les copolymères sont introduits à raison de 7,5 pcr.

Le mélange est homogénéisé dans un mélangeur rapide de type Papenmeyer.

Le mélange sec (correspondant à la terminologie anglaise « dry blend ») est extrudé avec une extrudeuse Haake-Polylab de laboratoire équipée d'une mono-vis et d'une filière jonc de diamètre 4 mm.

La rotation de la vis est de 34 tours/min. Les températures de consigne sont de 170°C, 200°C et 205°C en allant de l'arrière du fourreau d'extrudeuse vers la filière. La température de consigne de la filière est de 190°C. Les deux formulations ont un débit équivalent de l'ordre de 2 kg/h.

Dans ces conditions, l'échantillon selon l'exemple 2 conduit à un extrudat expansé de surface régulière et de densité 0,58. Ceci témoigne de l'homogénéité des chaînes de copolymère, et ce, grâce à l'adjonction de styrène dans une gamme spécifique.

L'échantillon selon l'exemple comparatif 2 conduit à un extrudat expansé de densité 0,58 et présentant une surface présentant de nombreuses aspérités (aspect de peau de requin), ce qui atteste de l'inhomogénéité des chaînes de copolymères.

## Revendications

1. Composition thermoplastique comprenant :
* au moins une matrice thermoplastique, et
* au moins un copolymère obtenu par copolymérisation de méthacrylate d'alkyle en C₁-C₄, d'un comonomère acrylate d'alkyle en C₁-C₈, et d'un monomère styrénique,
le méthacrylate d'alkyle en C₁-C₄ étant présent en une teneur allant de 75% à 92% en masse par rapport à la masse totale des monomères, le comonomère acrylate d'alkyle en C₁-C₈ étant présent en une teneur allant de 5 à 20% en masse par rapport à la masse totale des monomères et le monomère styrénique étant présent en une teneur allant de 3 à 20% en masse par rapport à la masse totale des monomères,
* qui est sous forme expansée.

2. Composition thermoplastique selon la revendication 1, dans laquelle la matrice thermoplastique est une matrice à base de polychlorure de vinyle, ABS, ASA, polycarbonate-polyester, polycarbonate-ABS, polycarbonate-ASA, ou mélange de deux ou plusieurs de ces polymères.

3. Composition thermoplastique selon la revendication 1 ou 2, dans laquelle la matrice thermoplastique est une matrice à base de polychlorure de vinyle.

4. Composition thermoplastique selon l'une quelconque des revendications précédentes, dans laquelle le monomère méthacrylate d'alkyle en C₁-C₄ est le méthacrylate de méthyle.

5. Composition thermoplastique selon l'une quelconque des evendications précédentes, dans laquelle le comonomère acrylate d'alkyle en C₁-C₈ est choisi parmi l'acrylate d'éthyle, l'acrylate de n-butyle et l'acrylate de 2-éthylhexyle.

6. Composition thermoplastique selon l'une quelconque des revendications précédentes, dans laquelle le comonomère acrylate d'alkyle en C₁-C₈ est l'acrylate de n-butyle.

7. Composition thermoplastique selon l'une quelconque des revendications précédentes, dans laquelle le comonomère acrylate d'alkyle en C₁-C₈ est présent en un teneur allant de 10% à 20% en masse par rapport à la masse totale des monomères.

8. Composition thermoplastique selon l'une quelconque des revendications précédentes, dans laquelle le monomère styrénique est choisi parmi le styrène, l'éthylstyrène et l'α-méthylstyrène.

9. Composition thermoplastique selon l'une quelconque des revendications précédentes, dans laquelle le monomère styrénique est présent en une teneur allant de 4 à 12% en masse par rapport à la masse totale des monomères.

10. Composition thermoplastique selon l'une quelconque des revendications précédentes, dans laquelle le copolymère est un copolymère obtenu par polymérisation de méthacrylate de méthyle, d'acrylate de n-butyle et de styrène.

11. Composition thermoplastique selon la revendication 10, dans laquelle le ratio méthacrylate de méthyle/acrylate de n-butyle/styrène est compris entre 80-90/7-10/3-10.

12. Composition thermoplastique selon l'une quelconque des revendications précédentes, dans laquelle le copolymère représente de 0,3% à 20%, de préférence, de 4% à 15%, et plus préférentiellement de 5% à 12% en masse par rapport à la masse totale de la composition.

13. Procédé de fabrication d'un article comprenant :
- une étape de formation d'un mélange de la composition thermoplastique selon l'une quelconque des revendications 1 à 12, et
- une étape de formation dudit article à partir de ladite composition.

14. Article formé à partir de ladite composition thermoplastique telle que définie selon l'une quelconque des revendications 1 à 12.

15. Article selon la revendication 14 ou obtenu selon le procédé de la revendication 13, qui est un profilé expansé, une plaque expansée ou un tube expansé.

## Patentansprüche

1. Thermoplastische Zusammensetzung, umfassend:
* mindestens eine thermoplastische Matrix und
* mindestens ein durch Copolymerisation eines C₁-C₄-Alkylmethacrylats mit einem C₁-C₈-Alkylacrylat-Comonomer und einem Styrolmonomer erhaltenes Copolymer,
wobei das C₁-C₄-Alkylmethacrylat in einem Gehalt im Bereich von 75 bis 92 Gew.-%, bezogen auf das Gesamtgewicht der Monomere, vorliegt, das C₁-C₈-Alkylacrylat-Comonomer in einem Gehalt im Bereich von 5 bis 20 Gew.-%, bezogen auf das Gesamtgewicht der Monomere, vorliegt und das Styrolmonomer in einem Gehalt im Bereich von 3 bis 20 Gew.-%, bezogen auf das Gesamtgewicht der Monomere, vorliegt,
* die in expandierter Form vorliegt.

2. Thermoplastische Zusammensetzung nach Anspruch 1, wobei es sich bei der thermoplastischen Matrix um eine Matrix auf Basis von Polyvinylchlorid, ABS, ASA, Polycarbonat-Polyester, Polycarbonat-ABS, Polycarbonat-ASA oder eine Mischung von zwei oder mehr dieser Polymere handelt.

3. Thermoplastische Zusammensetzung nach Anspruch 1 oder 2, wobei es sich bei der thermoplastischen Matrix um eine Matrix auf Basis von Polyvinylchlorid handelt.

4. Thermoplastische Zusammensetzung nach einem der vorhergehenden Ansprüche, wobei es sich bei dem C₁-C₄-Alkylmethacrylat-Monomer um Methylmethacrylat handelt.

5. Thermoplastische Zusammensetzung nach einem der vorhergehenden Ansprüche, wobei das C₁-C₈-Alkylacrylat-Comonomer aus Ethylacrylat, n-Butylacrylat und 2-Ethylhexylacrylat ausgewählt ist.

6. Thermoplastische Zusammensetzung nach einem der vorhergehenden Ansprüche, wobei es sich bei dem C₁-C₈-Alkylacrylat-Comonomer um n-Butylacrylat handelt.

7. Thermoplastische Zusammensetzung nach einem der vorhergehenden Ansprüche, wobei das C₁-C₈-Alkylacrylat-Comonomer in einem Gehalt im Bereich von 10 bis 20 Gew.-%, bezogen auf das Gesamtgewicht der Monomere, vorliegt.

8. Thermoplastische Zusammensetzung nach einem der vorhergehenden Ansprüche, wobei das Styrolmonomer aus Styrol, Ethylstyrol und α-Methylstyrol ausgewählt ist.

9. Thermoplastische Zusammensetzung nach einem der vorhergehenden Ansprüche, wobei das Styrolmonomer in einem Gehalt im Bereich von 4 bis 12 Gew.-%, bezogen auf das Gesamtgewicht der Monomere, vorliegt.

10. Thermoplastische Zusammensetzung nach einem der vorhergehenden Ansprüche, wobei es sich bei dem Copolymer um ein durch Polymerisation von Methylmethacrylat, n-Butylacrylat und Styrol erhaltenes Copolymer handelt.

11. Thermoplastische Zusammensetzung nach Anspruch 10, wobei das Methylmethacrylat/n-Butylacrylat/Styrol-Verhältnis zwischen 80-90/7-10/3-10 liegt.

12. Thermoplastische Zusammensetzung nach einem der vorhergehenden Ansprüche, wobei das Copolymer 0,3 bis 20 Gew.-%, vorzugsweise 4 bis 15 Gew.-% und weiter bevorzugt 5 bis 12 Gew.-%, bezogen auf die Gesamtmasse der Zusammensetzung, ausmacht.

13. Verfahren zur Herstellung eines Gegenstands, umfassend:
- einen Schritt der Bildung einer Mischung der thermoplastischen Zusammensetzung nach einem der Ansprüche 1 bis 12 und
- einen Schritt der Bildung des Gegenstands aus der Zusammensetzung.

14. Gegenstand, gebildet aus der thermoplastischen Zusammensetzung gemäß einem der Ansprüche 1 bis 12.

15. Gegenstand nach Anspruch 14 oder nach dem Verfahren von Anspruch 13 erhaltener Gegenstand, bei dem es sich um ein expandiertes Profil, eine expandierte Platte oder ein expandiertes Rohr handelt.

## Claims

1. Thermoplastic composition comprising:
• at least one thermoplastic matrix; and
• at least one copolymer obtained by copolymerizing a C₁-C₄ alkyl methacrylate with a C₁-C₈ alkyl acrylate comonomer and a styrene monomer,
the C₁-C₄ alkyl methacrylate being present in an amount ranging from 75% to 92% by weight relative to the total weight of the monomers, the C₁-C₈ alkyl acrylate comonomer being present in an amount ranging from 5 to 20% by weight relative to the total weight of the monomers and the styrene monomer being present in an amount ranging from 3 to 20% by weight relative to the total weight of the monomers, and
which is in expanded form.

2. Thermoplastic composition according to Claim 1, in which the thermoplastic matrix is a matrix based on polyvinyl chloride, ABS, ASA, polycarbonate-polyester, polycarbonate-ABS, polycarbonate-ASA or a blend of two or more of these polymers.

3. Thermoplastic composition according to Claim 1 or 2, in which the thermoplastic matrix is a matrix based on polyvinyl chloride.

4. Thermoplastic composition according to any one of the preceding claims, in which the C₁-C₄ alkyl methacrylate monomer is methyl methacrylate.

5. Thermoplastic composition according to any one of the preceding claims, in which the C₁-C₈ alkyl acrylate comonomer is chosen from ethyl acrylate, n-butyl acrylate and 2-ethylhexyl acrylate.

6. Thermoplastic composition according to any one of the preceding claims, in which the C₁-C₈ alkyl acrylate comonomer is n-butyl acrylate.

7. Thermoplastic composition according to any one of the preceding claims, in which the C₁-C₈ alkyl acrylate comonomer is present in an amount ranging from 10% to 20% by weight relative to the total weight of the monomers.

8. Thermoplastic composition according to any one of the preceding claims, in which the styrene monomer is chosen from styrene, ethylstyrene and α-methylstyrene.

9. Thermoplastic composition according to any one of the preceding claims, in which the styrene monomer is present in an amount ranging from 4 to 12% by weight relative to the total weight of the monomers.

10. Thermoplastic composition according to any one of the preceding claims, in which the copolymer is a copolymer obtained by the polymerization of methyl methacrylate, n-butyl acrylate and styrene.

11. Thermoplastic composition according to Claim 10, in which the methyl methacrylate/n-butyl acrylate/styrene ratio is between 80-90/7-10/3-10.

12. Thermoplastic composition according to any one of the preceding claims, in which the copolymer represents from 0.3% to 20%, preferably 4% to 15% and more preferably 5% to 12% by weight relative to the total weight of the composition.

13. Process for manufacturing an article, comprising:
- a forming step to form a compound of the thermoplastic composition according to any one of Claims 1 to 12; and
- a forming step to form said article from said composition.

14. Article formed from said thermoplastic composition as defined in any one of Claims 1 to 12.

15. Article according to Claim 14 or obtained according to the process of Claim 13, which is an expanded section, an expanded sheet, or an expanded tube.
